Europäisches Patentamt

European Patent Office

Office européen des brevets

(11) Veröffentlichungsnummer: **0 264 708**
**A1**

# (12) EUROPÄISCHE PATENTANMELDUNG

(21) Anmeldenummer: 87114563.7

(22) Anmeldetag: 06.10.87

(51) Int. Cl.4 **B29C 47/56** , B29C 47/06 , B29D 7/01 , //B29L7:00

(30) Priorität: 11.10.86 DE 3634681

(43) Veröffentlichungstag der Anmeldung:
27.04.88 Patentblatt 88/17

(84) Benannte Vertragsstaaten:
BE DE FR GB IT NL

(71) Anmelder: ER-WE-PA Maschinenfabrik und Eisengiesserei GmbH
Mettmanner Strasse 49/51
D-4006 Erkrath(DE)

(72) Erfinder: Schümichen, Uwe, Dipl.-Ing.
Lenaustrasse 34
D-4006 Erkrath(DE)
Erfinder: Djordjevic, Dragan, Dipl.-Ing.
Am Korresberg 24
D-4006 Erkrath(DE)

(74) Vertreter: Kiefer, Winfried, Dipl.-Phys.
Klöckner-Werke Aktiengesellschaft
Patentabteilung Klöcknerstrasse 29
D-4100 Duisburg 1(DE)

(54) Verfahren und Vorrichtung zum Extrudieren einer mehrschichtigen Folienbahn aus thermoplastischem Kunststoffmaterial.

(57) Die Erfindung betrifft ein Verfahren und eine zur Durchführung dieses Verfahrens geeignete Vorrichtung zum Extrudieren einer mehrschichtigen Folienbahn aus thermoplastischem Kunststoffmaterial, wobei in einer von mindestens einer Plastifiziereinheit - beispielsweise einem Extruder - gespeisten Mehrkanal-Breitschlitzdüse zunächst in jedem ihrer Kanäle eine Folienlage aus plastifiziertem thermoplastischem Kunststoffmaterial erzeugt wird, diese Folienlagen noch vor dem Erreichen des Düsenmundes zusammengeführt werden und die Gesamtheit der aufeinander abgelegten Folienlagen als mehrschichtige Folienbahn vorgegebener Dicke aus dem Düsenmund extrudiert wird. Dabei weist mindestens eine Folienlage bereits vor der Zusammenführung mit einer oder mehreren weiteren Folienlage(n) durch die Zwischenschaltung eines Feedblocks bekannter Art zwischen eine oder mehrere speisende Plastifiziereinheit(en) und den Eingang ihres Düsenkanals selbst schon eine Struktur mehrerer aufeinander abgelegter Schichten thermoplastischen Kunststoffmaterials auf.

Verfahren und Vorrichtung können bei geeigneter Materialwahl auch dazu dienen, mittels zweier Folienlagen mit jeweils einer Schicht aus Recyclingmaterial an ihren benachbarten Oberflächen eine mehrschichtige Folienbahn mit jedenfalls einer homogenen Recyclingschicht zu erzeugen.

## Verfahren und Vorrichtung zum Extrudieren einer mehrschichtigen Folienbahn aus thermoplastischem Kunststoffmaterial

Die Erfindung betrifft ein Verfahren und eine Vorrichtung zum Extrudieren einer mehrschichtigen Folienbahn aus thermoplastischem Kunststoffmaterial gemäß den Oberbegriffen der nebengeordneten Hauptansprüche 1 und 4.

Folien aus thermoplastischem Kunststoffmaterial haben sich in der Vergangenheit als Ausgangsmaterial für eine Vielzahl von gewerblichen Anwendungen durchgesetzt, beispielsweise für die Herstellung von Verpackungen aller Art. Im einfachsten Fall wird eine solche Folie erzeugt, indem kleinteiliges - beispielsweise granuliertes - festes Kunststoffmaterial aus einer oder mehreren mehr oder weniger homogen gemischten Komponente(n) in einer geeigneten Vorrichtung-beispielsweise einem Extruder - plastifiziert und anschließend einer Blasformmaschine oder einer Breitschlitzdüse mit nachgeschalteten Kühl-und Wickelrollen aufgegeben wird. Das Ergebnis ist entweder ein dünnwandiger Ballon oder eine durch die Breitschlitzdüse bezüglich ihrer Breite und Dicke definierte Folienbahn aus einer einzelnen Schicht von Kunststoffmaterial, die dann für die Weiterverarbeitung zur Verfügung steht.

Für die Verpackung insbesondere von Lebensmitteln oder Pharmazeutika - aber auch für andere Anwendungen - lassen sich jedoch die Anforderungen an die jeweils notwendigen Eigenschaften des zu verwendenden Kunststoffmaterials - beispielsweise hohe Festigkeit, hohe Flexibilität, geringe Sauerstoff-und Dampfdurchlässigkeit, Sperreigenschaft gegen Fett, Widerstandsfähigkeit gegen Fette und Öle, maximale und minimale Einsatztemperatur, Bedruckbarkeit usw. - im allgemeinen nicht mit einer Folie aus einer einzelnen Schicht von thermoplastischem Kunststoffmaterial, d.h. - einer Monofolie, erfüllen, selbst wenn das Kunststoffmaterial aus mehreren mehr oder weniger homogen gemischten Komponenten zusammengesetzt ist. In einem solchen Fall empfiehlt es sich vielmehr, als Ausgangsmaterial mehrschichtige Folien zu verwenden, wobei jede einzelne Schicht der Folie nur einen Teil der an die Folie insgesamt zu stellenden Anforderungen erfüllen muß. Die Erzeugung derartiger mehrschichtiger Folien, vorwiegend als Folienbahnen, kann durch Beschichtung eines jeweils vorhandenen Films mit Polymeren, durch Laminierung, d.h. Aufbringen einer Materialschicht auf eine jeweils vorhandene Trägermaterialschicht, mittels Kleber oder Extrusionsbeschichtung, d.h. Aufbringen einer Schicht plastifizierten Kunststoffmaterials mittels Breitschlitzdüse, durch Coextrusionsbeschichtung, d.h. gleichzeitiges Aufbringen mehrerer Schichten plastifizierten Kunststoffmaterials mittels Breitschlitzdüse auf eine vorhandene Trägermaterialschicht, oder durch direkte Coextrusion mehrer Schichten plastifizierten Kunststoffmaterials in ein System von Kühl-, Transport-und/oder Wickelrollen erfolgen.

Dabei hat sich für eine Vielzahl von weiterführenden Anwendungen die direkte Coextrusion mehrschichtiger Folienbahnen aus thermoplastischem Kunststoffmaterial als besonders zweckmäßig erwiesen. Gemäß einer Veröffentlichung in "neue verpackung 6/78, S. 842 - 848" kann eine solche direkte Coextrusion auf drei Wegen durchgeführt werden:

-entweder mittels einer Mehrkanal-Breitschlitzdüse mit Innenzusammenführung der plastifizierten Kunststoffmaterialien
-oder mittels eines Feedblocks, wie er beispielsweise grundsätzlich in der DE-PS 22 47 380 offenbart ist, und einer Einkanal-Breitschlitzdüse
-oder mittels Außenzusammenführung von Schmelzen aus mehreren Düsen.

Das letztgenannte Verfahren wird normalerweise nur zum Erzeugen zwei-oder dreischichtiger Blasfolien verwendet und kann hier im weiteren dahingestellt bleiben.

Die Mehrkanal-Breitschlitzdüse mit Innenzusammenführung der plastifizierten Kunststoffmaterialien hat den Vorteil, daß in ihr Kunststoffmaterialien sehr unterschiedlicher Schmelzviskositäten zu einer mehrschichtigen Folienbahn zusammengeführt werden können, da die einzelnen Kanäle mittels geeigneter Heizvorrichtungen vor ihrer Zusammenführung auf unterschiedlichen Temperaturniveaus gehalten werden können. Der wesentliche Nachteil der Mehrkanal-Breitschlitzdüse ist dadurch gegeben, daß sie im allgemeinen ohne konstruktionsbedingte Schwierigkeiten nur maximal drei Kanäle aufweisen kann. Im hier betrachteten Fall von Ausgangsmaterialien für Lebensmittelverpackungen oder ähnliches sind jedoch mehrschichtige Folienbahnen von sechs, sieben oder mehr Schichten wünschenswert.

Eine solche Möglichkeit bietet die Verwendung eines einer Einkanal-Breitschlitzdüse vorgeschalteten Feedblocks, der die Zusammenführung von zwei bis mehreren hundert Schichten gestattet, wobei die Zahl der die Feedblockeingänge speisenden Plastifiziereinheiten - beispielsweise Extruder - einerseits dadurch begrenzt ist, daß bei Verwendung nur einer derartigen Einheit eine Folienbahn aus identischen Schichten entsteht, und andererseits durch den konstruktionsbedingten Raumbedarf der Gesamtheit aller an den Feedblock anzuschließenden Plastifiziereinheiten. Eine Speisung mehrerer Feedblockeingänge durch eine Plastifiziereinheit ist dabei nicht ausgeschlossen. Die Verwendung eines Feedblocks weist allerdings den Nachteil auf, daß dieser wegen seiner kompakten Bauweise insgesamt nur auf einem einheitlichen Temperaturniveau gehalten werden kann und daher nur die Zusammenführung von Schichten aus plastifizierten Kunststoffmaterialien mit eng benachbarten Schmelzviskositäten gestattet.

Die vorliegende Erfindung hat sich daher die Aufgabe gestellt, die Nachteile der vorgenannten apparativen Anordnungen und der ihnen zugrundeliegenden Verfahren zu vermeiden und ein Verfahren sowie eine zur Durchführung dieses Verfahrens geeignete Vorrichtung zur Verfügung zu stellen, mit dem bzw. der insbesondere mehrschichtige Folienbahnen aus thermoplastischen Kunststoffmaterialien erzeugt werden können, auch wenn die Zahl der Schichten einerseits die Anzahl von drei deutlich überschreitet und andererseits die verwendeten Kunststoffmaterialien so unterschiedliche Schmelzviskositäten aufweisen, daß sie auf dem größten Teil ihres Verarbeitungsweges von der Plastifiziereinheit zum Düsenmund - zumindest gruppenweise - auf unterschiedlichen Temperaturniveaus gehalten werden müssen.

Diese Aufgabe löst die Erfindung mit den Merkmalen der kennzeichnenden Teile der nebengeordneten Hauptansprüche 1 und 4.

Dabei erweist es sich als besonders vorteilhaft, daß sowohl das erfindungsgemäße Verfahren als auch die erfindungsgemäße Vorrichtung gestatten, thermoplastische Kunststoffmaterialien eng benachbarter Schmelzviskositäten zunächst bei einer gemeinsamen konstanten Verarbeitungstemperatur zu einer mehrschichtigen Folienlage zu vereinigen, bevor diese Folienlage mit weiteren - wegen abweichender Schmelzviskositäten der zu verarbeitenden Kunststoffmaterialien bei anderen Verarbeitungstemperaturen erzeugten - Folienlagen auf verhältnismäßig kurzer Distanz vor dem Erreichen des Düsenmundes zu der gewünschten Folienbahn zusammengeführt wird.

Ein weiterer Vorteil - jedenfalls bezüglich der erfindungsgemäßen Vorrichtung - ist darin begründet, daß sich im Falle des Erfordernisses von mehr als fünf oder sechs verschiedenartigen thermoplastischen Kunststoffmaterialien für eine mehrschichtige Folienbahn die Anforderungen an den Raumbedarf der Gesamtheit der notwendigen Plastifiziereinheiten - beispielsweise Extruder - einfacher erfüllen las sen, wenn diese Gesamtheit zur Speisung von mehr als nur einem Feedblock um diese angeordnet werden kann - unabhängig von eventuellen speziellen Temperaturbedingungen an die verschiedenen Feedblöcke, wie oben angegeben.

Ein spezieller zusätzlicher Vorteil ergibt sich vor allem dann, wenn im Rahmen des erfindungsgemäßen Verfahrens mit der erfindungsgemäßen Vorrichtung zur Erzeugung von mindestens je einer Schicht in mindestens zwei Folienlagen Recyclingmaterial verarbeitet wird, das nach seiner Plastifizierung beim Zusammenführen zweier Folienlagen mit je einer, der jeweils anderen direkt benachbart angeordneten Schicht aus Recyclingmaterial eine einzige nahtlose Schicht innerhalb der entstehenden mehrschichtigen Folienbahn entstehen läßt. In diesem speziellen - weitgehend materialabhängigen - Fall lassen sich nämlich entgegen den in der DEOS 29 03 338 offenbarten Versuchsergebnissen, die eine Wiederverwendung von Recyclingmaterial nur in Form einer Mischung mit einem Bindemittel und mit einem maximalen Anteil von Recyclingmaterial von 15 % an der Gesamtstärke der neu entstehenden Folienbahn geraten erscheinen lassen, und in Überwindung von Ergebnissen der praktischen Anwendung einer Vorrichtungskombination aus einer Einkanal-Breitschlitzdüse mit einem vorgeschalteten Feedblock, die beim Überschreiten eines Wertes von etwa 30 % der Gesamtstärke einer neu entstehenden Folienbahn durch eine darin enthaltene Schicht aus Recyclingmaterial jeweils eine merkliche Störung der erwarteten und zu fordernden gleichmäßigen Schichtstruktur der Folienbahn über den gesamten Querschnitt des Düsenmundes zeigten, überraschenderweise homogene Recyclingschichten von beliebigem Anteil an der Gesamtstärke einer neu erzeugten mehrschichtigen Folienbahn erreichen. Damit wird jedoch eine einfache Möglichkeit zur Wiederverarbeitung von Recyclingmaterial auch in der Größenordnung eröffnet, bis zu der die Rate des Abfalls beispielsweise beim Tiefziehen von Behältern zur Verpackung von Lebensmitteln aus mehrschichtigen Folienbahnen anwachsen kann, nämlich bis zu 60 % des verarbeiteten Folienmaterials. Bei der Bedeutung der Verpackungs industrie in der modernen Industriegesellschaft führt dies auch in absoluten Zahlenwerten zu Abfallmengen, für deren Wiederverwendung ein möglichst einfaches Verfahren mit einer entsprechenden Vorrichtung sowohl aus wirtschaftlichen als auch aus Umweltschutzgründen erstrebenswert ist.

Im letztgenannten Fall erübrigt sich allerdings die Aufrechterhaltung unterschiedlicher Temperaturniveaus für die verschiedenen Feedblöcke, sofern nicht beide für die Erzeugung einer homogenen Recyclingschicht erforderlichen Folienlagen zusätzliche Schichten enthalten, die wegen ihrer erforderlichen Schmelzviskosität jeweils eine Verarbeitungstemperatur an den entgegengesetzten Grenzbereichen des für das Recyclingmaterial zulässigen Temperaturbereichs während der Folienlagen-Erzeugung erfordern.

Jedenfalls im Falle der Erzeugung einer Recyclingschicht beliebiger Stärke innerhalb einer mehrschichtigen Folienbahn weist die erfindungsgemäße Vorrichtung im übrigen den weiteren Vorteil auf, daß die Mehrkanal-Breitschlitzdüse in jedem mit einem vorgeschalteten Feedblock versehenen Kanal vor der Zusammenführung mit weiteren Kanälen eine Stabilisierungsstrecke beinhaltet, die der Ausbildung einer gleichmäßigen Schichtstruktur der entstehenden Folienbahn über den gesamten Querschnitt des Düsenmundes dient.

In der Zeichnung wird die Erfindung anhand eines Ausführungsbeispiels erläutert.

Es zeigen:

Fig. 1: Perspektivische Ansicht einer - schematisch dargestellten Gesamtanlage, bei der die erzeugte mehrschichtige Folienbahn unmittelbar an ein Tiefziehwerkzeug zur Erzeugung von Bechern übergeben wird.

Fig. 2: Schnitt durch eine Zweikanal-Breitschlitzdüse einschließlich der vorgeschalteten Feedblöcke.

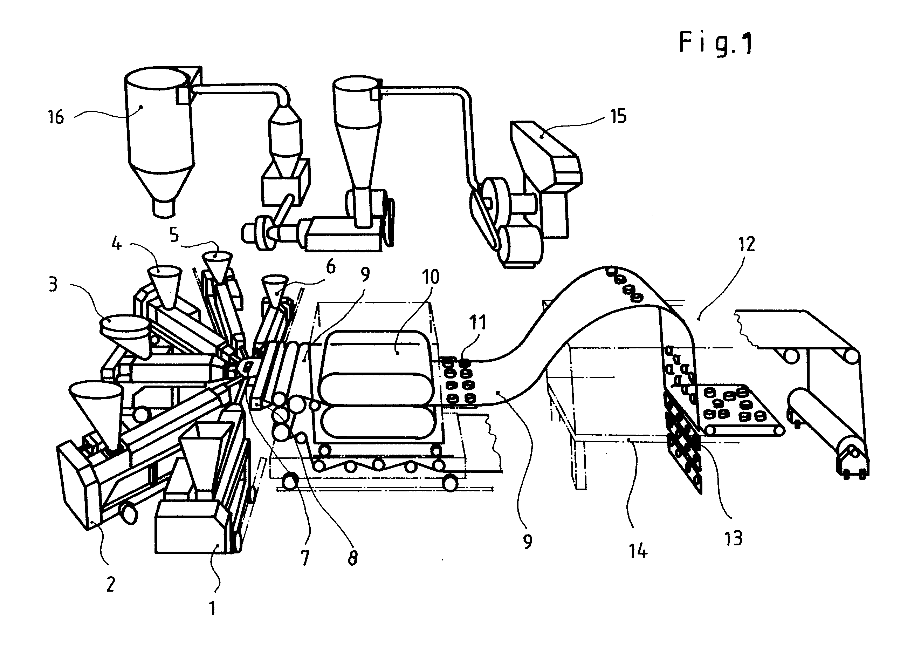

Die Fig. 1 zeigt einen Satz von Extrudern 1 - 6 als Beispiele möglicher Plastifiziereinheiten, die das jeweils von ihnen plastifizierte thermoplastische Kunststoffmaterial über eine Feedblock-Anordnung 7 an sich bekannter Art an eine Breitschlitzdüse 8 abgeben. Aus dieser Breitschlitzdüse 8 wird die mehrschichtige Folienbahn 9 extrudiert, die im vorliegenden Fall unmittelbar einem Tiefziehwerkzeug 10 als Beispiel einer hier möglichen Arbeitsstation zugeführt wird, in der aus der Folienbahn 9 Becher 11 tiefgezogen werden. Die Becher 11 werden in der folgenden Stanzstation 12 bekannter Art aus der Folienbahn 9 herausgestanzt, die durch das Ausstanzen der Becher 11 aus der Folienbahn 9 entstandenen gitterartigen Folienreste 13 werden in der Zerkleinerungsstation 14 mittels einer Messeranordnung zerkleinert und anschließend der Granuliereinrichtung 15 zum Granulieren der zerkleinerten Folienreste zugeführt. Das Granulat wird zwecks Speicherung in den Vorratsbehälter 16 gefördert und von hier aus in dosierten Mengen an den Extruder 4 zur Erzeugung einer oder mehrerer Recyclingschicht(en) innerhalb der Folienbahn 9 abgegeben.

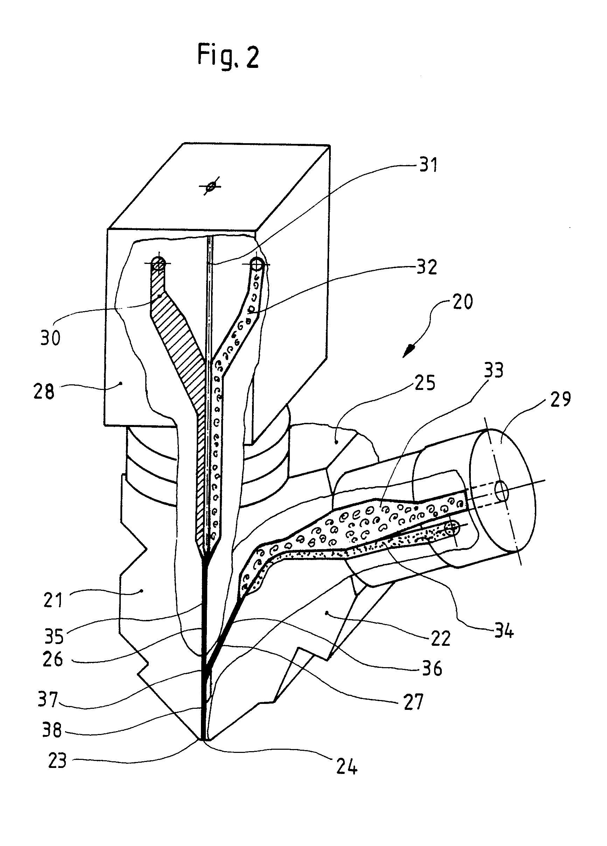

Die Fig. 2 zeigt einen Schnitt durch eine Zweikanal-Breitschlitzdüse 20 mit den beiden Düsenkörpern 21 und 22, die im Bereich des Düsenmundes 23 den die mehrschichtige Folienbahn begrenzenden und entlassenden Spalt 24 definieren. Mittels des Düsenkörperzwischenstücks 25 legen sie außerdem die Kanäle 26 und 27 fest, denen die Feedblöcke 28 bzw. 29 bekannter Art vorgeschaltet sind, die in Fig. 1 zusammengefaßt als Feedblock-Anordnung 7 dargestellt sind. Die beiden Feedblöcke 28, 29 werden von hier nicht dargestellten Plastifiziereinheiten - beispielsweise Extrudern - mit plastifizierten thermoplastischen Kunststoffmaterialien 30 - 34 gespeist, die nach Ausbildung einer drei- bzw. zweischichtigen Folienlage die Stabilisierungsstrecken 35 bzw. 36 in Richtung auf die Vereinigungsstelle 37 durchströmen, wo sie zu der gewünschten mehrschichtigen Folienbahn zusammengeführt werden, die dann durch den gemeinsamen Kanal 38 zum Düsenmund 23 geführt und aus dem Spalt 24 extrudiert wird.

Die gleichartige grafische Kennzeichnung der Kunststoffmaterialien 32 und 33 weist darauf hin, daß bei geeigneter Materialauswahl diese dargestellten Kunststoffmaterialien 32 und 33 Recyclingmaterial derselben Art sein können, die an der Vereinigungsstelle 37 zu einer homogenen Recyclingschicht vereinigt werden.

Die Steuerung der Schichtdicke der einzelnen Schichten und damit der Dicke der mehrschichtigen Folienbahn erfolgt in bekannter Weise.

Bezugszeichenliste

1 - 6 Extruder
7 Feedblock-Anordnung
8 Breitschlitzdüse
9 mehrschichtige Folienbahn
10 Tiefziehwerkzeug
11 Becher
12 Stanzstation
13 gitterartige Folienreste
14 Zerkleinerungsstation
15 Granuliereinrichtung
16 Vorratsbehälter

20 Zweikanal-Breitschlitzdüse
21, 22 Düsenkörper
23 Düsenmund
24 Spalt
25 Düsenkörperzwischenstück
26, 27 Kanäle
28, 29 Feedblöcke
30-34 Kunststoffmaterialien
35, 36 Stabilisierungsstrecken
37 Vereinigungsstelle
38 gemeinsamer Kanal

**Ansprüche**

1. Verfahren zum Extrudieren einer mehrschichtigen Folienbahn aus thermoplastischem Kunststoffmaterial, bei dem das plastifizierte Kunststoffmaterial den Kanälen einer Mehrkanal-Breitschlitzdüse zugeführt wird, die aus den einzelnen Kanälen austretenden Folienlagen bereits vor dem Erreichen des Düsenmundes der Mehrkanal-Breitschlitzdüse zusammengeführt werden und die Gesamtheit der aufeinander abgelegten Folienlagen als mehrschichtige Folienbahn vorgegebener Dicke aus dem Düsenmund austritt, dadurch gekennzeichnet, daß mindestens eine der Folienlagen bereits vor der Zusammenführung mit einer oder mehreren weiteren Folienlage(n) eine Struktur mehrerer aufeinander abgelegter Schichten thermoplastischen Kunststoffmaterials aufweist.

2. Verfahren zum Extrudieren einer mehrschichtigen Folienbahn nach Anspruch 1, dadurch gekennzeichnet, daß mindestens eine Folienlage mindestens eine Schicht von Recyclingmaterial aus erneut plastifiziertem, bereits zuvor einer Verarbeitung unterzogenem Kunststoffmaterial enthält.

3. Verfahren zum Extrudieren einer mehrschichtigen Folienbahn nach Anspruch 2, dadurch gekennzeichnet, daß das Recyclingmaterial aus Abfällen von zuvor erzeugter Folie der der zu erzeugenden Folie entsprechenden Art gebildet wird.

4. Vorrichtung zur Durchführung des Verfahrens zum Extrudieren einer mehrschichtigen Folienbahn nach einem der Ansprüche 1 bis 3, die jedenfalls eine von einer oder mehreren Plastifiziereinheit(en), beispielsweise einem oder mehreren Extruder(n), mit plastifiziertem thermoplastischem Kunststoffmaterial gespeiste Mehrkanal-Breitschlitzdüse enthält, dadurch gekennzeichnet, daß mindestens einem der von einer oder mehreren Plastifiziereinheit(en)(1 - 6) gespeisten Kanäle (26,27) der Mehrkanal-Breitschlitzdüse (20) ein Feedblock (28,29) vorgeschaltet ist.

5. Vorrichtung zum Extrudieren einer mehrschichtigen Folienbahn nach Anspruch 4, dadurch gekennzeichnet, daß jedenfalls jeder mit einem vorgeschalteten Feedblock (28, 29) versehene Kanal (26,27) der Mehrkanal-Breitschlitzdüse (20) vor der Zusammenführung der in ihm erzeugten Folienlage mit einer oder mehreren weiteren Folienlage(n) eine Stabilisierungsstrecke (35, 36) aufweist.

Fig.1

0 264 708

## Fig. 2

## EINSCHLÄGIGE DOKUMENTE

EP 87114563.7

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| A | GB - A - 1 421 464 (CROMPTON & KNOWLES)<br><br>* Fig. 3; Seite 3, Zeilen 14-55 * <br><br>-- | 1,4,5 | B 29 C 47/56<br>B 29 C 47/06<br>B 29 D 7/01<br>//B 29 L 7:00 |
| A | DE - B2 - 1 629 360 (THE DOW CHEMICAL CO.)<br><br>* Gesamt *<br><br>-- | 1 | |
| A | FR - A1 - 2 343 582 (ROCCHI)<br><br>* Gesamt *<br><br>-- | 4 | |
| A | DE - A - 2 311 164 (WELEX)<br><br>* Gesamt *<br><br>-- | | **RECHERCHIERTE SACHGEBIETE (Int. Cl.4)** |
| A | DE - B2 - 1 902 317 (AMERICAN CAN CO.)<br><br>* Gesamt *<br><br>---- | | B 29 C<br>B 29 D |

Der vorliegende Recherchenbericht wurde für alle Patentansprüche erstellt.

| Recherchenort | Abschlußdatum der Recherche | Prüfer |
|---|---|---|
| WIEN | 19-11-1987 | MAYER |